# EUROPEAN PATENT SPECIFICATION

(11) **EP 1 382 886 B1**
(45) Date of publication and mention of the grant of the patent: **16.08.2006**
(21) Application number: 03014768.0
(22) Date of filing: 27.06.2003
(51) Int. Cl.: F16H 55/36, F16F 15/124

(54) **An integrated pulley-torsional damper assembly**
Riemenscheibe mit integrierter Torsionsdämpferanordnung
Poulie avec un amortisseur d'oscillation de torsion integré

(30) Priority: 16.07.2002 IT TO20020621
(43) Date of publication of application: 21.01.2004
(73) Proprietor: DAYCO EUROPE S.r.l., 66013 Chieti (IT)
(72) Inventor: Riu, Hervé, 38140 La Murette (FR)
(74) Representative: Franzolin, Luigi

(56) References cited:
- EP-A- 0 790 440
- DE-A- 4 226 116
- US-A- 5 988 015

## Description

The present invention relates to an integrated pulley-torsional damper assembly.

Integrated pulley-torsional damper assemblies are known, see e.g. US-A-5 988 015, which constitutes the closest prior art, and which comprise a hub designed for being rigidly connected to a drive member, for example the drive shaft of an internal-combustion engine, a driven member connected to the hub by means of a ring made of elastomeric material having the function of filter for the torsional oscillations, and an inertia ring, connected to the hub by means of a second ring made of elastomeric material, which defines with the inertia ring a damping system.

Integrated assemblies of the type described briefly above are used, for instance, in the automotive sector and are connected, at one end of the drive shaft of an internal-combustion engine to enable driving, by means of a belt transmission, of auxiliary members of the engine, for example, an alternator, a fan and/or a compressor, and enable, at the same time, damping of the torsional oscillations of the drive shaft.

Known assemblies of the type described briefly above present a number of drawbacks.

In the first place, they comprise a relatively large number of components and hence involve high manufacturing costs and burdensome assembly cycles. In addition, in the case where the hub and the pulley are made of stamped sheet metal without any additional machining operations, the precision of positioning of the pulley that can be obtained at the end of assembly is somewhat limited.

The purpose of the present invention is to provide an integrated pulley-damper assembly that will be free from the drawbacks linked to the known assemblies specified above.

The aforesaid purpose is achieved by the present invention, in so far as it relates to an integrated pulley-torsional damper assembly as claimed in claim 1.

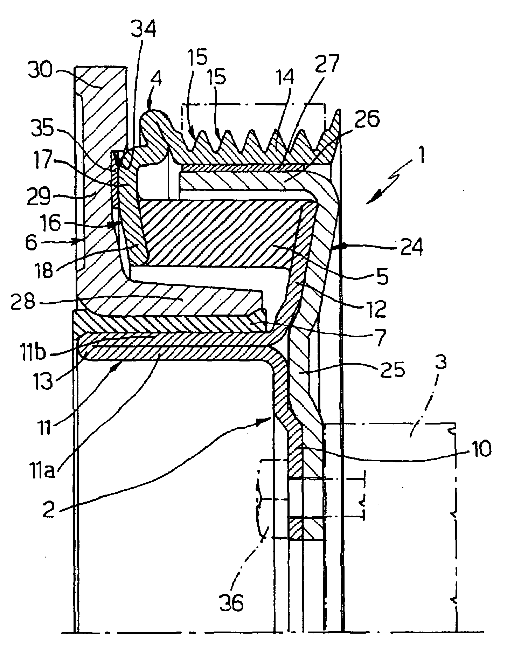

For a better understanding of the present invention, there follows a description of a preferred embodiment, provided purely by way of non-limiting example, and with reference to the attached drawing, which illustrates a radial cross section of the assembly.

With reference to the figure, the number 1 designates, as a whole, a pulley-damper assembly according to the present invention.

The assembly 1 comprises a hub 2 designed for being rigidly connected to a drive member 3, for example, the drive shaft or a gear of the distribution rigidly constrained thereto, a pulley 4 connected to the hub 2 by means of a first ring 5 made of elastomeric material (hereinafter referred to simply as "first elastomeric ring 5") having the function of filter for torsional oscillations, and an inertia ring 6 connected to the hub 2 by means of a second annular element 7 made of elastomeric material (hereinafter referred to simply as "second elastomeric ring 7"), which defines with the inertia ring 6 a damping system.

In greater detail, the hub 2 is made of stamped sheet metal and comprises integrally an internal annular portion 10 designed for connection to the drive member 3, an intermediate tubular portion 11 extending axially on the side opposite to the drive member 3 and co-operating radially with the second elastomeric ring 7, and an external flange 12 fitted to the first elastomeric ring 5.

The intermediate portion 11 is bent back through 180° at one of its free edges 13 and is therefore made up of two layers 11a, 11b of sheet metal set radially on top of one another and integral, respectively, with the internal annular portion and the external flange 12. The latter has a conical profile inclined outwards on the side opposite to the intermediate portion 11.

The pulley 4, which is conveniently of the type having multiple grooves (poly-V type), is conveniently made of sheet metal by means of successive pressing and rolling operations and comprises integrally a substantially cylindrical crown 14, which defines, on one of its outer surfaces, the grooves 15, and an annular flange 16, which extends integrally inwards from an axial end of the crown 14 and is set axially facing the flange 12 of the hub 2. The flange 16 has a plane outer portion 17 and a conical inner portion 18, which converges inwards towards the flange 12 and is fitted to the latter by means of the first elastomeric ring 5, which has a trapezoidal cross section that diverges outwards.

The connection is obtained in a vulcanization mould (not illustrated). After vulcanization, the hub 2, the first elastomeric ring 5, and the pulley 4 define a transmission member 18 in the form of a single body.

The first elastomeric ring 5 is made of a relatively "soft" elastomeric material, i.e., one with a sufficiently low modulus of elasticity. The resulting high torsional deformability enables "filtration" of the pulse-like variations of torque and resistant torque, thus providing a sort of "flexible coupling" between the drive member and the pulley 4.

The assembly 1 further comprises an auxiliary annular element 14, which is also made of stamped sheet metal and which is formed by a disk 25 set so that it bears axially upon the outer face of the inner annular portion 10 and of the flange 12 of the hub 2, and a cylindrical peripheral annular crown 26, which extends axially within the crown 14 of the pulley 4 coaxially with respect to the latter. A bushing 27 made of a material having a low coefficient of friction, such as, for example, a fluoropolymer, is set between the annular crown 26 and the crown 14 of the pulley 4, with the purpose of supporting radially, ideally without friction, the pulley 4. The disk 25 has a profile conjugated to the profile of the inner annular portion 10 and of the flange 12 of the hub 2 so as to ensure centring between the hub 2 and the pulley 4.

The inertia ring 6, which is conveniently made of cast iron that subsequently undergoes machining, comprises integrally an inner tubular portion 28, which is mounted on the tubular portion 11 of the hub 2, with interposition of the second elastomeric ring 7, which has the shape of a tubular sleeve, and a disk 29, which extends, from one free end of the tubular portion 28, outwards. The disk 29 of the inertia ring 6 has a peripheral crown 30 of larger thickness, which forms internally, on the side where the pulley 4 is present, a step-shaped inner seat 34, into which a ring 35 is driven having the function of axial plain bearing. The ring 35 is made of a material having a low coefficient of friction, for example, a fluoropolymer.

Assembly of the shock ring on the hub 2 is obtained by mechanical drive fit, with radial forcing of the elastomeric ring 7. The ring 35 is brought into contact with the pulley 2, and, in particular, with the plane outer portion 17 of the flange 16 of the pulley so as to bring about a pre-set axial pre-compression of the first elastomeric ring 5 and define uniquely the axial position of the pulley 2 at the end of the assembly cycle.

Installation of the assembly 1 on the drive member 3 is obtained by means of a ring of axial tap screws 36, which pack-tightens the hub 2 and the auxiliary annular element 24 against the said drive member 3.

In use, the pulley 4 is fitted rotationally to the hub 2 by means of the first elastomeric ring 5, which filters any lack of uniformity in the angular velocity of the drive shaft and filters any instantaneous variations of resistant torque. The inertia ring 6 and the second elastomeric ring 7 are sized, in terms of moment of inertia of the former and torsional elasticity of the latter, to obtain pre-set damping characteristics. The pulley 3 is supported radially and axially by the bushing 27 and by the ring 35, respectively.

From an examination of the characteristics of the assembly 1 built according to the present invention, the advantages that the said invention enables emerge evidently.

In the first place, making the hub 2 of a single piece of shaped sheet metal defining an inner portion for connection with the drive member 3, an intermediate tubular portion for fitting to the second elastomeric ring 7, and an external flange for fitting to the first elastomeric ring 5 enables a reduction in the total number of components of the assembly, as well as a simplification of the assembly cycle.

Furthermore, assembly of the inertia ring 6 on the hub 2 enables accurate definition of the axial position of the pulley 4 without the need for any subsequent machining operations.

Finally, the noise of the device is attenuated since the pulley 4 is "shielded" by the inertia ring 6, which is not in rigid connection with the drive shaft and, hence, is isolated from any causes of forced oscillation.

Finally, the arrangement of the hub 2 and of the inertia ring 6 enables an optimal dissipation of the heat generated by the second elastomeric ring 7.

## Claims

1. An integrated pulley-torsional damper assembly comprising a hub (2) designed for being rigidly connected to a drive member (3), a pulley (4) connected to the hub (2) by means of a first ring (5) made of elastomeric material having the function of filter for the torsional oscillations, and an inertia ring (6), connected to the hub (2) by means of a second ring (7) made of elastomeric material, which defines with the inertia ring (6) a damping system, said hub (2) being made of stamped sheet metal and comprising a radially internal annular portion (10) designed for connection to the drive member (3), a tubular portion (11) extending axially and co-operating radially with said second elastomeric ring (7), and an external flange (12) fitted to said first elastomeric ring (5), **characterised in that** said annular portion (10), said tubular portion (11) and said external flange (12) are formed in a single piece of which said tubular portion (11) forms a radially intermediate portion, said external flange (12) extending radially outwards of said tubular portion (11).

2. The assembly according to Claim 1, **characterized in that** said intermediate tubular portion (11) is made up of two layers (11a,11b) of sheet metal, bent one on top of the other.

3. The assembly according to Claim 1 or Claim 2, **characterized in that** said pulley (4) comprises a peripheral crown (14) and a flange (16), which extends radially towards the inside from said peripheral crown (14), said first elastomeric ring (5) being set axially between said flange (16) of said pulley (4) and said external flange (12) of said hub (2) and forming a single body with them.

4. The assembly according to Claim 3, **characterized in that** said elastomeric ring (7) is radially forced between said inertia ring (6) and said tubular portion of said hub (2), said inertia ring (6) co-operating axially with said pulley (4) on the side opposite to said first elastomeric ring (5) so as to define the axial position thereof with respect to said hub (2).

5. The assembly according to Claim 4, **characterized in that** said inertia ring (6) comprises a tubular portion (28) mounted on said intermediate tubular portion (11) of said hub (2) with interposition of said second elastomeric ring (7), and a disk (29), which extends radially from one end of said tubular portion (28) of said inertia ring (6) and co-operates axially with said pulley (4).

6. The assembly according to Claim 5, **characterized in that** it comprises an axial bearing (35) set between said disk (29) of said inertia ring (6) and said pulley (4).

7. The assembly according to any one of Claims 3 to 6, **characterized in that** it comprises an auxiliary annular element (24), which is set so that it bears axially upon said hub (2) and which is provided with a peripheral annular crown (26), which is coaxial with and internal to said crown (14) of said pulley (4), a radial bearing (27) being set between said crown (14) of said pulley (4) and said peripheral annular crown (26) of said auxiliary annular element (24).

## Patentansprüche

1. Integrierte Baugruppe aus Riemenscheibe und Torsionsdämpfer, die eine Nabe (2), die zur starren Verbindung mit einem Antriebselement (3) bestimmt ist, eine Riemenscheibe (4), die mit der Nabe (2) mittels eines ersten Rings (5) verbunden ist, der aus Elastomermaterial besteht und die Funktion eines Filters für die Torsionsschwingungen erfüllt, und einen Trägheitsring (6) umfasst, der mit der Nabe (2) mittels eines zweiten Rings (7) verbunden ist, der aus Elastomermaterial besteht und mit dem Trägheitsring (6) ein Dämpfsystem bildet, wobei die Nabe (2) aus gestanztem Blech besteht und einen radial innen liegenden ringförmigen Abschnitt (10), der zur Verbindung mit dem Antriebselement (3) bestimmt ist, einen röhrenförmigen Abschnitt (11), der sich axial erstreckt und radial mit dem zweiten Elastomerring (7) zusammenwirkt, sowie einen äußeren Flansch (12) umfasst, der auf den ersten Elastomerring (5) aufgepasst ist, **dadurch gekennzeichnet, dass** der ringförmige Abschnitt (10), der röhrenförmige Abschnitt (11) und der äußere Flansch (12) aus einem Stück bestehen, wobei der röhrenförmige Abschnitt (11) einen radial mittigen Abschnitt bildet und sich der äußere Flansch (12) von dem röhrenförmigen Abschnitt (11) radial nach außen erstreckt.

2. Baugruppe nach Anspruch 1, **dadurch gekennzeichnet, dass** der mittlere röhrenförmige Abschnitt (11) aus zwei Schichten (11a, 11 b) aus Blech besteht, von denen eine über die andere gebogen ist.

3. Baugruppe nach Anspruch 1 oder Anspruch 2, **dadurch gekennzeichnet, dass** die Riemenscheibe (4) eine Umfangskrone (14) und einen Flansch (16) umfasst, der sich von der Umfangskrone (14) radial nach innen erstreckt, wobei der erste Elastomerring (5) axial zwischen den Flansch (16) der Riemenscheibe (4) und den äußeren Flansch (12) der Nabe (2) eingesetzt ist und einen Körper mit ihnen bildet.

4. Baugruppe nach Anspruch 3, **dadurch gekennzeichnet, dass** der Elastomerring (7) radial zwischen den Trägheitsring (6) und den röhrenförmigen Abschnitt der Nabe (2) gedrückt wird und der Trägheitsring (6) auf der Seite gegenüber dem ersten Elastomerring (5) axial mit der Riemenscheibe (4) zusammenwirkt, um die axiale Position derselben in Bezug auf die Nabe (2) zu bestimmen.

5. Baugruppe nach Anspruch 4, **dadurch gekennzeichnet, dass** der Trägheitsring (6) einen röhrenförmigen Abschnitt (28), der an dem mittleren röhrenförmigen Abschnitt (11) der Nabe (2) angebracht ist, wobei der zweite Elastomerring (7) dazwischen angeordnet ist, und eine Scheibe (29) umfasst, die sich radial von einem Ende des röhrenförmigen Abschnitts (28) des Trägheitsrings (6) erstreckt und axial mit der Riemenscheibe (4) zusammenwirkt.

6. Baugruppe nach Anspruch 5, **dadurch gekennzeichnet, dass** sie ein Axiallager (35) umfasst, das zwischen die Scheibe (29) des Trägheitsrings (6) und die Riemenscheibe (4) eingesetzt ist.

7. Baugruppe nach einem der Ansprüche 3 bis 6, **dadurch gekennzeichnet, dass** sie ein zusätzliches ringförmiges Element (24) umfasst, das so eingesetzt ist, dass es axial auf die Nabe (2) drückt, und das mit einer Umfangs-Ringkrone (26) versehen ist, die koaxial zu der Krone (14) der Riemenscheibe (4) ist und sich in ihrem Inneren befindet, wobei ein Radiallager (27) zwischen die Krone (14) der Riemenscheibe (4) und die Umfangs-Ringkrone (26) des zusätzlichen ringförmigen Elementes (24) eingesetzt ist.

## Revendications

1. Ensemble d'amortisseur de torsion avec poulie intégrée comprenant un moyeu (2) conçu pour être relié de façon rigide à l'élément d'entraînement (3), une poulie (4) reliée au moyeu (2) au moyen d'une première bague (5) constituée d'un matériau élastomère ayant la fonction de filtre pour les oscillations de torsion, et une bague d'inertie (6) reliée au moyeu (2) au moyen d'une seconde bague (7) constituée d'un matériau élastomère, qui définit avec la bague d'inertie (6) un système d'amortissement, ledit moyeu (2) étant constitué d'une tôle de métal estampée et comprenant une partie annulaire radialement interne (10) conçue pour une liaison avec l'élément d'entraînement (3), une partie tubulaire (11) s'étendant axialement et coopérant radialement avec ladite seconde bague élastomère (7), et une bride externe (12) adaptée à ladite première bague élastomère (5), **caractérisé en ce que** ladite partie annulaire (10), ladite partie tubulaire (11) et ladite bride externe (12) sont formées d'une seule pièce dont ladite partie tubulaire (11) forme une partie radialement intermédiaire, ladite bride externe (12) s'étendant radialement à l'extérieur de ladite partie tubulaire (11).

2. Ensemble selon la revendication 1, **caractérisé en ce que** ladite partie tubulaire intermédiaire (11) est constituée de deux couches (11a, 11b) de tôle de métal, pliées l'une sur l'autre.

3. Ensemble selon la revendication 1 ou la revendication 2, **caractérisé en ce que** ladite poulie (4) comprend une couronne périphérique (14) et une bride (16), qui s'étend radialement vers l'intérieur depuis ladite couronne périphérique (14), ladite première bague élastomère (5) étant disposée axialement entre ladite bride (16) et ladite poulie (4) et ladite bride externe (12) dudit moyeu (2) et formant un seul corps avec ceux-ci.

4. Ensemble selon la revendication 3, **caractérisé en ce que** ladite bague élastomère (7) est enfoncée radialement entre ladite bague intérieure (6) et la partie tubulaire dudit moyeu (2), ladite bague d'inertie (6) coopérant axialement avec ladite poulie (4) sur le côté opposé à ladite première bague élastomère (5) de façon à définir sa position axiale par rapport audit moyeu (2).

5. Ensemble selon la revendication 4, **caractérisé en ce que** ladite bague d'inertie (6) comprend une partie tubulaire (28) montée sur ladite partie tubulaire intermédiaire (11) dudit moyeu (2) avec une interposition de ladite seconde bague élastomère (7), et un disque (29), qui s'étend radialement depuis une extrémité de ladite partie tubulaire (28) de ladite bague d'inertie (6) et coopère axialement avec ladite poulie (4).

6. Ensemble selon la revendication 5, **caractérisé en ce qu'**il comprend un palier axial (35) disposé entre ledit disque (29) de ladite bague d'inertie (6) et de ladite poulie (4).

7. Ensemble selon l'une quelconque des revendications 3 à 6, **caractérisé en ce qu'**il comprend un élément annulaire auxiliaire (24), qui est disposé de telle sorte qu'il porte axialement sur ledit moyeu (2) et qui est doté d'une couronne annulaire périphérique (26) qui est coaxiale avec ladite couronne (14) de ladite poulie (4) et interne à celle-ci, un palier radial (27) étant disposé entre ladite couronne (14) et ladite poulie (4) et ladite couronne annulaire périphérique (26) dudit élément annulaire auxiliaire (24).
